# FASCICULE DE BREVET EUROPEEN

(11) **EP 2 467 294 B1**
(45) Date de publication et mention de la délivrance du brevet: **06.01.2016**
(21) Numéro de dépôt: 09786157.9
(22) Date de dépôt: 19.08.2009
(51) Int. Cl.: B62K 21/26

(54) **POIGNÉE POUR GUIDON D'UN VÉHICULE À DEUX ROUES**
HANDGRIFF FÜR DIE LENKSTANGE EINES ZWEIRAD-FAHRZEUGS
HANDLE FOR TWO-WHEELED VEHICLE HANDLEBARS

(43) Date de publication de la demande: 27.06.2012
(73) Titulaire: Badollet, Pascal, 1254 Jussy (CH)
(72) Inventeur: Badollet, Pascal, 1254 Jussy (CH)
(74) Mandataire: Micheli & Cie SA
(86) Numéro de dépôt international: PCT/IB2009/006595
(87) Numéro de publication internationale: WO 2011/021060

(56) Documents cités:
- EP-A2- 1 712 460
- WO-A1-2004/048187
- AT-B- 377 737
- DE-U1- 9 112 567
- DE-U1-202005 013 861

## Description

La présente invention a pour objet une poignée pour guidon d'un véhicule à deux roues, notamment d'une bicyclette.

Le guidon d'un véhicule à deux roues et notamment d'une bicyclette est généralement constitué d'un tube, métallique le plus souvent, cintré ou non et comportant au moins deux portions préhensibles par l'utilisateur pour conduire le véhicule. Lesdites portions sont le plus souvent sensiblement rectilignes et perpendiculaires au cadre du véhicule à deux roues. Pour plus de confort et une meilleure préhension, lesdites portions du guidon sont souvent recouvertes de poignée en caoutchouc ou autre matière plastique. Pour conduire le véhicule, l'utilisateur place la paume de sa main contre le guidon et serre celui-ci entre son pouce et ses quatre autres doigts.

Cependant, ces poignées conventionnelles ne font qu'épouser la forme du guidon. Elles n'offrent pas une plus grande surface d'appui et sont donc très peu ergonomiques. Les contraintes articulaires dans le poignet de l'utilisateur sont grandes et contribuent ainsi à augmenter l'usure des surfaces articulaires du poignet et à diminuer le rendement musculaire. L'absence de zone d'appui adéquate et adaptée à la forme du poignet de ces poignées peut également induire des douleurs en cas de conduite prolongée du véhicule, notamment d'une bicyclette.

Une autre poignée, correspondant au préambule de la revendication 1, est connue du document DE-U-9112567.

Le but de la présente invention est de réaliser une poignée pour guidon d'un véhicule à deux roues et notamment d'une bicyclette qui soit ergonomique, qui s'adapte à la main de l'utilisateur, offrant au poignet de l'utilisateur un positionnement et un appui confortable, diminuant les contraintes articulaires et réduisant le risque de douleur lors de la conduite prolongée du véhicule, tout en permettant une conduite précise dudit véhicule.

La présente invention à pour objet une poignée pour guidon d'un véhicule à deux roues, notamment d'une bicyclette, présentant les caractéristiques énumérées à la revendication 1.

Dans la suite, le terme poignet désignera l'ensemble des os composé de l'extrémité inférieure du radius, de l'extrémité inférieure du cubitus (également appelé ulna) et du carpe lui-même constitué.de huit os répartis en deux rangées. Le terme main quant à lui désignera l'ensemble des os composé du carpe, du métacarpe (constitué de cinq os métacarpiens) et des phalanges au nombre de quatorze.

Les dessins annexés illustrent schématiquement et à titre d'exemple non limitatif une forme d'exécution d'une poignée pour guidon d'un véhicule à deux roues, notamment d'une bicyclette, selon l'invention.
La figure 1 illustre une poignée selon l'invention montée sur le guidon d'une bicyclette et vue de dessus par rapport à celle-ci.
Les figures 2a et 2b sont des vues de face, respectivement de côté d'un guidon d'une bicyclette muni de deux poignées selon l'invention telles qu'illustrées à la figure 1 et mettant en évidence la position des poignets et des mains d'un utilisateur de ladite bicyclette.
La figure 3 illustre l'ensemble des os du poignet et de la main gauches d'un utilisateur tenant une poignée selon l'invention et met en évidence le positionnement desdits os.
La figure 4 est une vue de côté de l'avant bras, du poignet et de la main gauches d'un utilisateur tenant la poignée selon l'invention.
La figure 5 illustre l'ensemble des os du poignet et de la main gauches d'un utilisateur tenant une poignée pour guidon de l'art antérieur.
La figure 6 est une vue de côté du poignet, de la main et de l'avant bras gauches d'un utilisateur tenant une poignée de l'art antérieur.

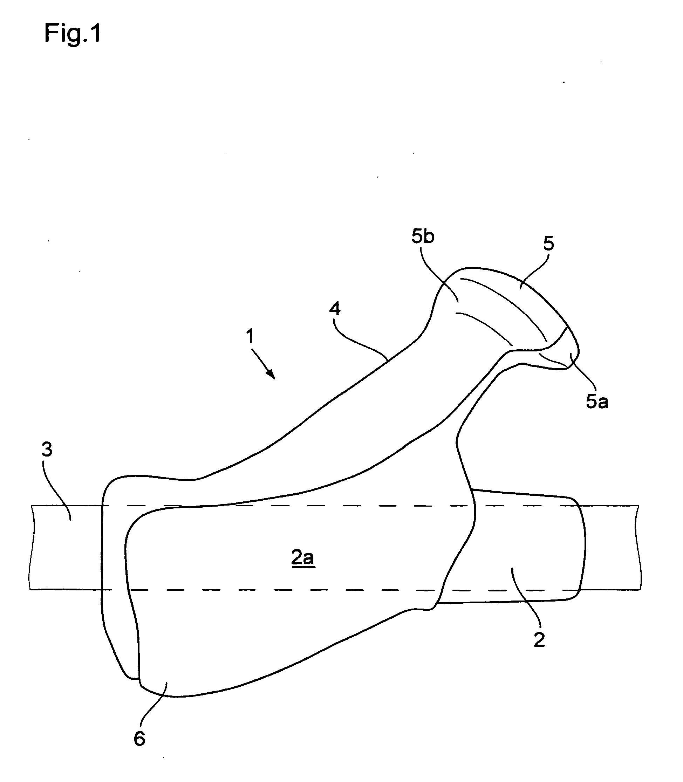

La poignée 1 selon l'invention et telle qu'illustrée aux figures 1 à 4 comprend un corps principal 2 allongé, creux et destiné à être monté sur le guidon 3 d'un véhicule à deux roues et en particulier d'une bicyclette. De préférence, la poignée 1 est montée sur une section du guidon 3 sensiblement rectiligne et perpendiculaire au cadre de la bicyclette.

La poignée 1 comprend encore une tige 4 solidaire du corps principal 2 et terminée par une butée 5. De préférence, la butée 5 a une forme large et arrondie.

La tige 4 a une inclinaison de 30° à 60°, de préférence 40°, par rapport à l'axe longitudinal du guidon.

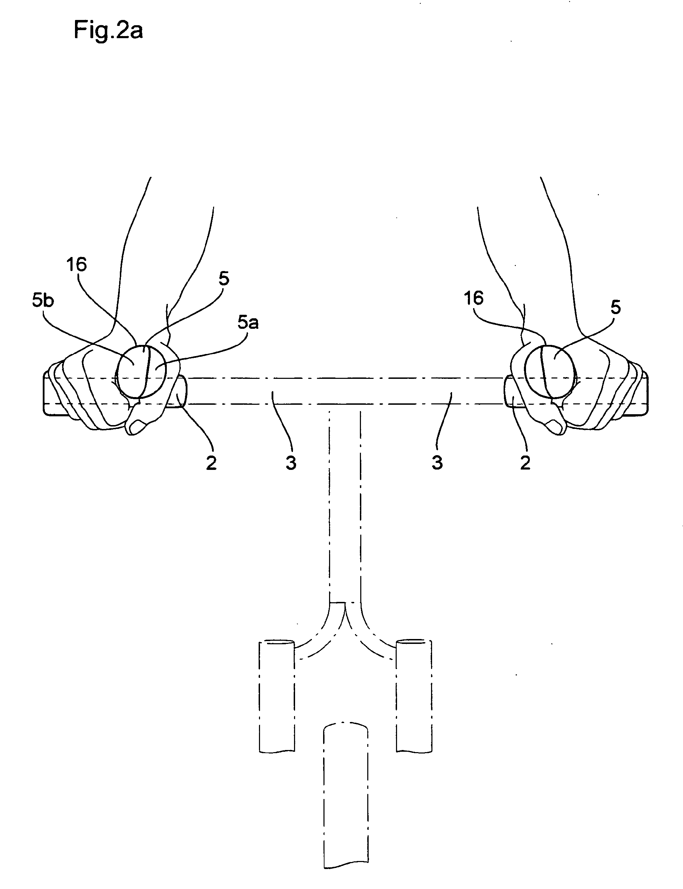

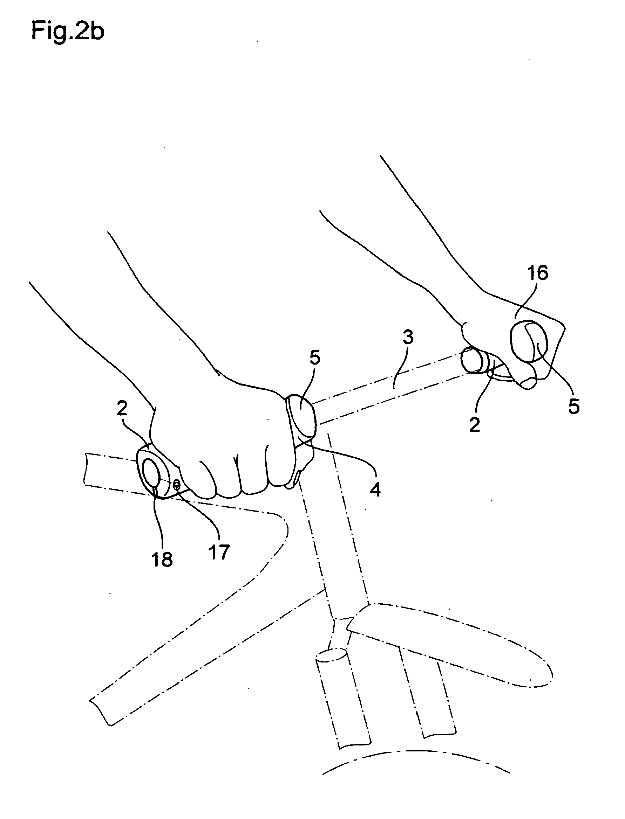

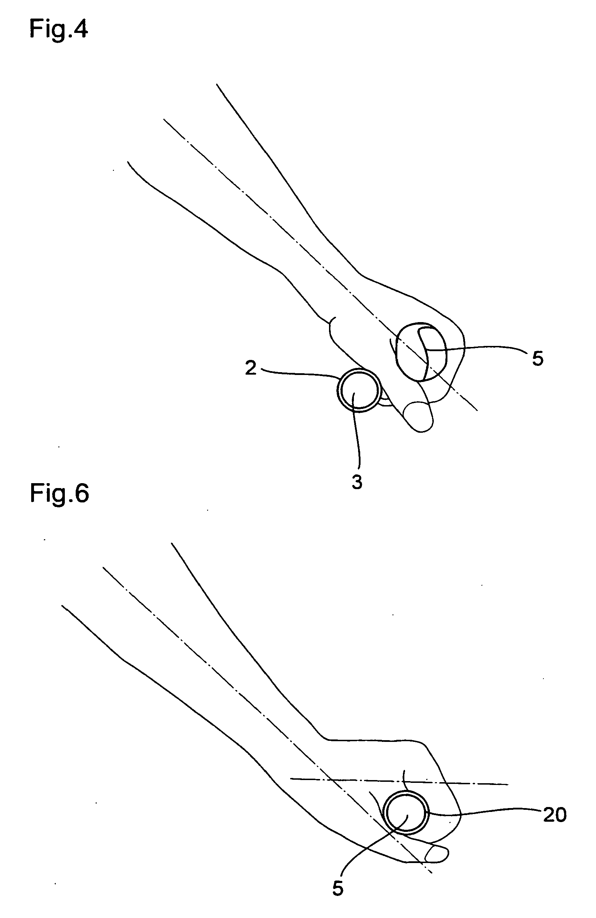

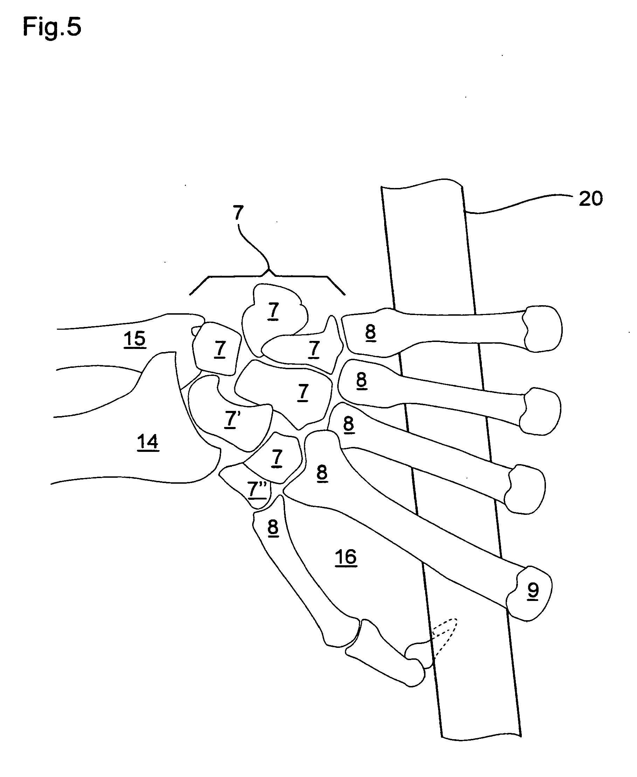

Comme illustré sur les figures 2 à 4, l'utilisateur place sa paume contre le corps principal 2 de la poignée 1 et serre la tige 4 de ladite poignée entre son pouce et ses autres doigts. Ainsi, contrairement à l'utilisation des poignées conventionnelles 20 illustrée aux figures 5 et 6, la main de l'utilisateur ne serre pas le guidon mais la tige 4 de la poignée 1.

Avec la poignée 1 selon la présente forme d'exécution, l'appui du carpe 7 de la main de l'utilisateur sur la poignée 1 se fait en regard du guidon et non au dessus. Le corps principal 2 doit donc être suffisamment large et présente une partie plane 2a conformée de manière à garantir un meilleur appui du carpe 7 et de la paume de la main. De préférence, le corps principal 2 comprend encore une zone d'appui annexe 6 offrant un appui supplémentaire et différent au pilote.

Comme illustrée sur les figures 2 à 4, en position de service, les os métacarpiens 8 des doigts, à l'exception de celui du pouce, reposent sur la tige 4. Celle-ci est suffisamment longue pour éviter un appui permanent sur l'espace inter-métacarpien 16 du pouce et de l'index et en particulier sur l'articulation 9 entre l'os métacarpiens 8 et la phalange 10 de l'index ainsi que sur l'articulation 11 de la première phalange du pouce 12.

De plus, la tige 4 est suffisamment courte pour, en cas de freinage par exemple, offrir immédiatement un appui à la main grâce à la butée 5. Celle-ci est également suffisamment large pour offrir en cas de freinage ou de forte déclivité un appui suffisant à l'espace inter-métacarpien 16 compris entre les premier et deuxième os métacarpiens 8 (du pouce et de l'index respectivement) comme illustré aux figures 2a et 2b. La butée 5 évite ainsi à la main de glisser. La forme large de la butée est également un atout en descente, la butée 5 bloquant la main de l'utilisateur en lui assurant un bon appui. De plus, la butée 5 offre, si désiré, un appui supplémentaire à la main, permettant au pilote de varier les appuis et donc les contraintes et d'augmenter ainsi le confort général. De préférence, la butée 5 a une forme arrondie illustrée sur les figures mais pourrait en variante présenter tout autre forme appropriée, l'essentiel étant qu'elle soit suffisamment large pour empêcher la main et en particulier l'espace entre le pouce et l'index de glisser le long de la tige 4.

Les dimensions de la tige 4 et de la butée 5 dépendent donc de la morphologie de l'utilisateur et en particulier de la taille de la paume pour la longueur de la tige 4 et de l'empan de sa main pour la largeur de la butée 5. Lesdites dimensions sont donc comprises de préférence entre 7 et 20 cm et 5 et 10 cm, respectivement. Ainsi plusieurs formes d'exécution pourront être réalisées, selon que la poignée selon l'invention est destinée à un utilisateur enfant ou adulte, femme ou homme.

L'angle de la tige 4 avec l'axe longitudinal du guidon 3, valant entre 30° et 60°, correspond à l'angle de prono-supination (mouvement de rotation axiale de l'avant-bras amenant la paume vers le bas pour la pronation et vers le haut pour la supination) optimal pour le rendement musculaire de l'avant bras.

Comme illustré sur la figure 2b, la poignée 1 comprend une fente 18 permettant une mise en place et un ajustement aisé de la poignée 1 sur le guidon3. Une vis de réglage 17 coopérant avec un contre-écrou (non représenté) permet de fixer par serrage la poignée 1 au guidon 3 dans une position choisie. Tout autre moyen de serrage et de réglage approprié pourrait remplacé le système composé de la fente 18 et de la vis 17 et de son contre-écrou.

L'angle de flexion/extension du poignet se règle selon le confort de l'utilisateur en pivotant la poignée 1 autour du guidon 3 vers l'arrière ou vers l'avant respectivement après avoir dévissé la vis de réglage 17. Comme illustré à la figure 6, il est, pratiquement impossible d'ajuster la flexion et/ou l'extension du poignet avec un poignée de l'art antérieur 20, le poignet étant toujours en extension, ce qui a long terme peut causer des douleurs.

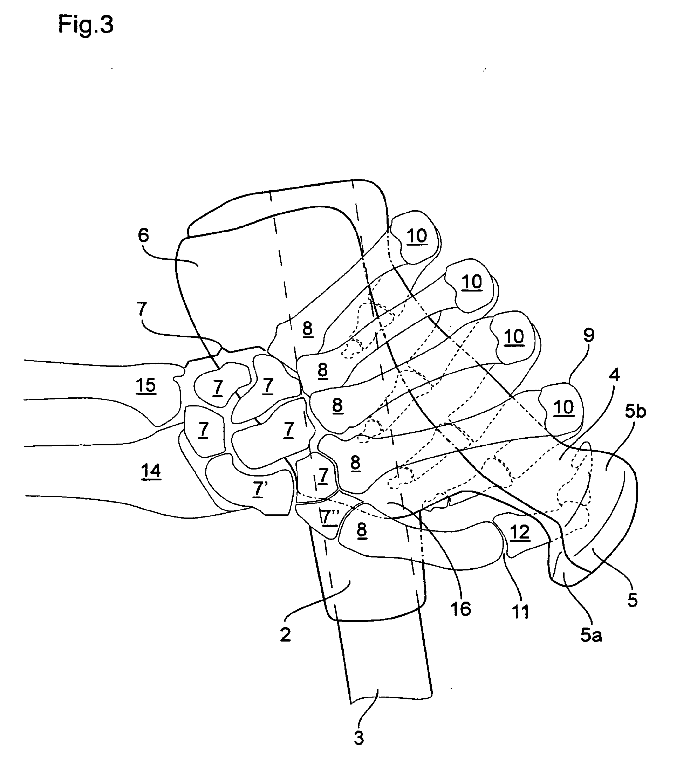

De plus, comme illustré à la figure 5, une poignée de l'art antérieur 20 oblige l'utilisateur à imposer une inclinaison radiale du carpe 7 par rapport à l'axe longitudinale du radius 14. Cette déviation non ergonomique et non physiologique est génératrice de contraintes articulaires particulièrement sur le scaphoïde 7' et le trapèze 7" du carpe 7 du poignet de l'utilisateur. La poignée 1 selon l'invention permet d'éviter une telle déviation. En effet, comme illustré en vue de dessus sur la figure 3, en position de service, l'alignement du carpe 7 sur le radius 14 et le cubitus 15 est optimal (aucune inclinaison radiale). De même, au contraire de l'art antérieur et comme illustré en vue latérale sur la figure 4, l'alignement total entre les os du carpe 7 et le radius 14 et le cubitus 15 est possible avec une poignée 1 selon l'invention, ledit carpe 7 et lesdits cubitus 15 et radius 14 étant dans un même plan.

Les poignées selon l'invention offrent :
1. une diminution de la pression unitaire des articulations les unes par rapport aux autres par le fait que l'ensemble des surfaces articulaires des articulations s'offrent mutuellement leurs plus grandes surfaces d'appui disponible, comme illustré à la figure 3. La figure 5 offre une vue comparable à celle de la figure 3 mais pour une poignée de l'art antérieur cette fois. On remarque les pressions du radius 14 sur la partie externe du carpe 7 et notamment le scaphoïde 7' et le trapèze 7", ainsi que du carpe 7 sur les os métacarpiens 8. La diminution de pression ainsi offerte permet :
   a. une diminution des contraintes de pressions interarticulaires ce qui diminue donc l'usure articulaire ;
   b. une diminution des douleurs articulaires ;
   c. un meilleur rendement musculaire (moins les articulations sont sous contrainte, meilleure est la contraction musculaire et donc la force). Le rendement musculaire étant optimal, cela évite un excès de contractions et de tensions musculaires ce qui permet :
      i. une meilleure circulation artério-veineuse ;
      ii. une meilleure relaxation musculaire ;
      iii. une meilleure détente des nerfs sensitivo-moteurs ce qui évite des irradiations sensitives douloureuses par tensions mécaniques des nerfs sensitifs et moteurs.
2. Une diminution de la permanence des contraintes, par la forme de l'ensemble de la poignée 1 qui est adoucie pour épouser la forme de la main. Ceci a pour but d'éviter des zones d'appui qui, à la longue, sont désagréables, douloureuses voire génératrices d'usure articulaire (arthrose).

La poignée selon l'invention, et notamment le corps principal 2 et la tige 4, sont de préférence réalisés en plastique dur et peuvent être munis d'un revêtement anti-dérapant. Tout autre matériau approprié pourrait être utilisé, comme le métal, l'aluminium ou le carbone pour la fabrication du corps 2 et de la tige 4.

De préférence, la butée 5 comporte des parties latérales 5a et 5b visibles sur les figure 1 à 3 constituées ou recouvertes d'une matière élastique et molle ayant une valeur basse d'environ 18 sur l'échelle de Shore OO (à tire comparatif, sur la même échelle, le chewing gum a une valeur de 20 et une selle de bicyclette en gel a une valeur entre 15 et 30). De même, la portion plate 2a du corps principal 2, zone d'appui de la paume de l'utilisateur ainsi que la zone d'appui annexe 6 sont de préférence réalisées dans le même matériau que les parties latérales 5a et 5b de la butée 5. Tout autre matière plus ou moins molle et élastique pourrait être utilisée.

La poignée 1 selon l'invention offre un grand confort à l'utilisateur tout en lui permettant d'actionner les leviers des freins (système de freinage à disques ou à mâchoires) ainsi que les manettes du système de changement de vitesse du véhicule et notamment de la bicyclette.

Par la présente invention, on réalise donc une poignée ergonomique pour guidon de véhicule à deux roues et notamment d'une bicyclette, offrant un grand confort d'appui pour l'utilisateur ce qui permet de réduire le risque de douleur et d'usure des articulations lors de la conduite du véhicule.

## Revendications

1. Poignée (1) pour guidon (3) d'un véhicule à deux roues et notamment d'une bicyclette, comprenant un corps principal (2) de forme sensiblement cylindrique adaptable sur une portion du guidon (3) rectiligne et sensiblement perpendiculaire au cadre du véhicule, et une tige (4) solidaire du corps principal (2), l'angle entre la tige (4) et l'axe longitudinal du guidon (3) étant compris entre 30° et 60°, **caractérisée par le fait que** la tige (4) comporte à son extrémité libre une butée (5) conformée de manière à retenir la main de l'utilisateur et offrir un appui.

2. Poignée (1) selon la revendication 1, **caractérisée par le fait que** le corps principal (2) a une portion large et aplatie (2a) épousant la forme de la paume et en particulier du carpe (7) de la main de l'utilisateur.

3. Poignée (1) selon l'une des revendications précédentes, **caractérisée par le fait que** le corps principal (2) comprend une zone d'appui annexe (6) permettant à l'utilisateur de varier les appuis et les positions de son poignet.

4. Poignée (1) selon l'une des revendications précédentes, **caractérisée par le fait que** le corps principal (2) et la tige (4) sont réalisés dans un plastique rigide creux et recouvert d'un revêtement anti-dérapant.

5. Poignée (1) selon l'une des revendications précédentes, **caractérisée par le fait que** la zone d'appui annexe et/ou la portion large et aplatie du corps principal (2) et/ou les parties latérales (5a, 5b) de la butée (5) sont réalisés dans un matériau élastique et mou dont la valeur sur l'échelle de Shore OO est comprise entre 15 et 20.

6. Poignée (1) selon l'une des revendications précédentes, **caractérisée par le fait que** l'angle entre la tige 4 et l'axe longitudinal du guidon (3) est de 40°.

7. Poignée (1) selon l'une des revendications 1 à 6, **caractérisée par le fait que** la longueur de la tige (4) et la largeur de la butée 5 sont comprises respectivement entre 6 et 20 cm et 5 et 10 cm.

## Patentansprüche

1. Handgriff (1) für die Lenkstange (3) eines Zweirad-Fahrzeugs und insbesondere eines Fahrrads, der einen Hauptkörper (2) mit im Wesentlichen zylindrischer Form, der auf einem Abschnitt der Lenkstange (3) angepasst werden kann, der geradlinig und im Wesentlichen senkrecht zum Rahmen des Fahrzeugs ist, und einen Stab (4) umfasst, der fest mit dem Hauptkörper (2) verbunden ist, wobei der Winkel zwischen dem Stab (4) und der Längsachse der Lenkstange (3) zwischen 30° und 60° enthalten ist, **dadurch gekennzeichnet, dass** der Stab (4) an seinem freien Ende einen Anschlag (5) umfasst, der derart angepasst ist, dass er die Hand des Benutzers zurückhält und ihr eine Stütze bietet.

2. Handgriff (1) nach Anspruch 1, **dadurch gekennzeichnet, dass** der Hauptkörper (2) einen breiten und flachen Abschnitt (2a) aufweist, der sich an die Form der Handfläche und insbesondere der Handwurzel (7) der Hand des Benutzers anpasst.

3. Handgriff (1) nach einem der vorhergehenden Ansprüche, **dadurch gekennzeichnet, dass** der Hauptkörper (2) eine Nebenstützzone (6) umfasst, die es dem Benutzer ermöglicht, die Stützen und die Positionen seines Handgelenks zu variieren.

4. Handgriff (1) nach einem der vorhergehenden Ansprüche, **dadurch gekennzeichnet, dass** der Hauptkörper (2) und der Stab (4) aus einem Kunststoff hergestellt sind, der starr und hohl ist und mit einer rutschfesten Beschichtung bedeckt ist.

5. Handgriff (1) nach einem der vorhergehenden Ansprüche, **dadurch gekennzeichnet, dass** die Nebenstützzone und/oder der breite und flache Abschnitt des Hauptkörpers (2) und/oder die seitlichen Teile (5a, 5b) des Anschlags (5) aus einem elastischen und weichen Material hergestellt sind, dessen Wert auf der Shore-00-Skala zwischen 15 und 20 enthalten ist.

6. Handgriff (1) nach einem der vorhergehenden Ansprüche, **dadurch gekennzeichnet, dass** der Winkel zwischen dem Stab (4) und der Längsachse der Lenkstange (3) 40° beträgt.

7. Handgriff (1) nach einem der Ansprüche 1 bis 6, **dadurch gekennzeichnet, dass** die Länge des Stabes (4) und die Breite des Anschlags (5) zwischen 6 und 20 cm beziehungsweise 5 und 10 cm enthalten sind.

## Claims

1. Grip (1) for the handlebars (3) of a two-wheeled vehicle and in particular of a bicycle, including a main body (2) of essentially cylindrical shape capable of fitting onto a portion of the handlebars (3) that is rectilinear and essentially perpendicular to the frame of the vehicle, and a shaft (4) that is integral with the main body (2), the angle between the shaft (4) and the longitudinal axis of the handlebars (3) being between 30° and 60° **characterized in that** the shaft (4) includes an abutment (5) at its free end that is shaped so as to hold the hand of the user and provide support.

2. Grip (1) according to claim 1, **characterized in that** the main body (2) has a wide and flattened portion (2a) that molds to the shape of the palm and in particular of the carpus (7) of the user's hand.

3. Grip (1) according to one of the preceding claims, wherein the main body (2) includes a supplementary support area (6) allowing the user to vary the supports and the positions of his wrist.

4. Grip (1) according to one of the preceding claims, wherein the main body (2) and the shaft (4) are made of hollow, rigid plastic covered with an anti-slip coating.

5. Grip (1) according to one of the preceding claims, wherein the supplementary support area and/or the wide and flattened portion of the main body (2) and/or the lateral portions (5a,5b) of the abutment (5) are made of soft, elastic material with a value on the Shore OO scale of between 15 and 20.

6. Grip (1) according to one of the preceding claims, wherein the angle between the shaft (4) and the longitudinal axis of the handlebars (3) is 40°.

7. Grip (1) according to one of Claims 1 to 6, wherein the length of the shaft (4) and the width of the abutment (5) are between 6 and 20 cm and 5 and 10 cm respectively.
